# EUROPEAN PATENT SPECIFICATION

(11) **EP 1 738 944 B1**
(45) Date of publication and mention of the grant of the patent: **17.11.2010**
(21) Application number: 05105698.4
(22) Date of filing: 27.06.2005
(51) Int. Cl.: B60J 7/02

(54) **Method of assembling sunroof frame, and structure thereof**
Schiebedachrahmen, und Verfahren zur Montage
Méthode pour montage d'un chassis pour toit ouvrant, et structure

(43) Date of publication of application: 03.01.2007
(73) Proprietor: Ford Global Technologies, LLC, Dearborn, MI 48126 (US)
(72) Inventor: Runius, Hakan, S-423 40 Torslanda (SE)
(74) Representative: Ekström, Nils

(56) References cited:
- EP-A- 0 315 516
- GB-A- 2 059 884
- US-A- 4 416 487
- US-A- 4 749 227
- US-A- 5 681 076

## Description

### TECHNICAL FIELD

The invention relates to a vehicle sunroof structure for a vehicle body, which structure comprises a sunroof frame, a support frame and associated attachment means, and a method for assembling such a sunroof structure as shown for example in document GB 2 059 884.

### BACKGROUND ART

Vehicle roof modules which are made separately from the vehicle bodywork and only connected with the vehicle bodywork on the assembly line at the car factory are becoming increasingly popular in particular owing to a considerable reduction in assembly times on the assembly belt. Such vehicle roof modules may be provided with a separate or an integral sunroof unit. Sunroof units or cassettes may be mounted in a sunroof frame that makes up a part of the vehicle body. The sunroof frame construction must fulfil certain safety requirements with regard to strength and performance. In addition, the sunroof frame must also be accurately positioned during assembly of the vehicle in order to facilitate subsequent assembly of the vehicle roof module.

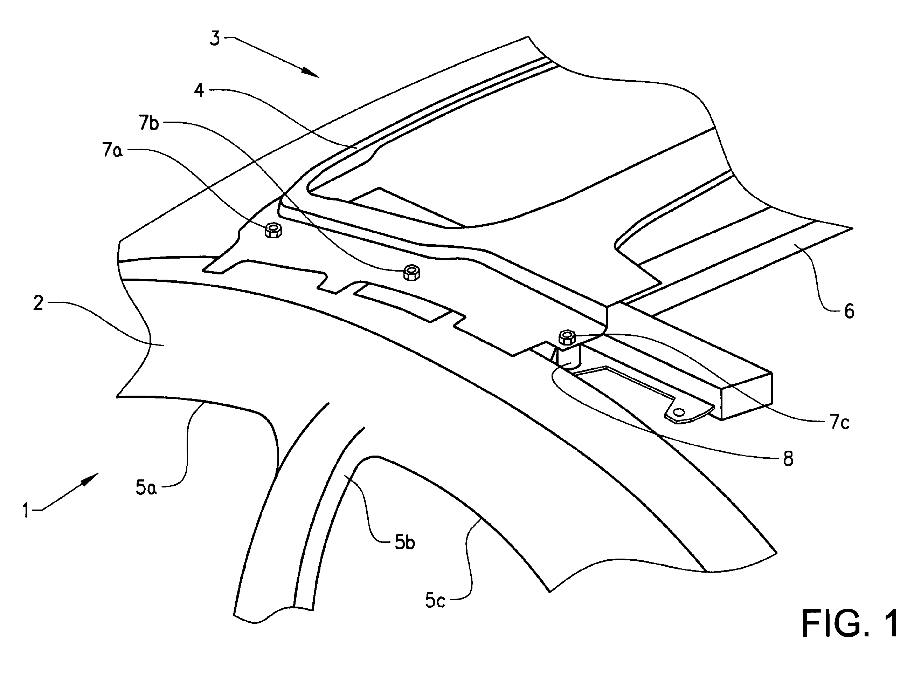

One method of attaching a sunroof frame to the vehicle body is to position and simultaneously weld the side edges of a sunroof frame directly onto a pair of substantially parallel side rails extending longitudinally from the upper ends of a pair of front A-posts to the upper ends of a pair of rear C-posts. The A- and C-posts and the side rail may be formed an integrated unit. A problem with this solution is that the entire sunroof frame must be manoeuvred into an exact position by at least one manipulator and held in this position while the sunroof frame is being welded to the side rails. The welding process is further complicated by the front and rear transverse sections of the sunroof frame, which limit access to any weld locations located between said front and rear sections. A further problem is that the heat developed during the welding process may cause local deformation and warping of the sunroof frame. Inaccurate positioning or local deformation of the sunroof frame may in turn cause problems during subsequent assembly of a sunroof unit or cassette as well as any adjacent roof sections. An example of such a prior art sunroof assembly is shown schematically in Figure 1.

Figure 1 indicates a vehicle body 1 and a section of a roof side rail 2 onto which a sunroof structure 3 has been attached. A sunroof frame 4 is attached to the side rail 2 by welding at a number of predetermined positions 5a-5c. Here, the purpose of the sunroof frame is to connect the roof side rails on opposing sides of the vehicle and to provide a support for the roof section or sections adjacent the sunroof opening. The figure gives an indication of the difficulties involved in accessing the welding positions. In a subsequent operation, a support frame 6 is attached to the underside of the sunroof frame 4 by means of a bolt and nut joint 7a-7c and a spacer means 8 (only one shown). The support frame is used for locating and supporting the cassette, which cassette contains the sliding and/or tilting sunroof, guide means, electrical control means and drive unit or units. The drive units used are usually electrically controlled and operated, but can also be manually or hydraulically operated.

An alternative method of assembling a vehicle sunroof frame is disclosed in US 5 681 076, wherein attachment brackets are bolted onto a side rail and corresponding mounting portions are bolted onto each attachment bracket. A problem with this solution is that each mounting portion on the sunroof frame requires a separate bracket, wherein holes for each bracket must be accurately machined in the side rail prior to, or during, the assembly of the side rail or vehicle. Once such a hole is machined, the position of a cooperating bracket is not easily altered.

The object of the invention is therefore to provide an improved vehicle roof module and a method of assembling such vehicle roof module of the type indicated above, which both simplifies and speeds up the assembly process in addition to avoiding the above problems.

### DISCLOSURE OF INVENTION

According to the invention these object are achieved by a method of assembling a vehicle roof module, as claimed in claim 1, and a roof module made according to this method, as claimed in claim 8.

According to a preferred embodiment, the invention relates to a method for assembling a vehicle sun roof structure onto a vehicle body, wherein the sunroof structure comprising a sunroof frame and a support frame is mounted between first and second side rails. The side rails extending in the longitudinal direction of the vehicle body and substantially defining an upper contour and outer side edges of a roof for said vehicle body. Such side rails are sometimes referred to as a roof side rails and comprise the front A-posts, the rear C-post and a substantially horizontal intermediate section, which may be straight or slightly curved. The each side rail can optionally be supported by an intermediate B-post, located immediately behind the rear edge of the front door.

The method comprises the steps of;
- locating a first and a second set of brackets along opposing sides of a section of a respective first and second side rails and welding the sets of brackets to said side rails,
- locating a sunroof frame and a support frame onto a number of transverse sections of said first and second set of brackets and attaching the sunroof frame and support frame to each transverse section of said brackets by the same, common attachment means.

The opposing sides of the section of a respective first and second side rails to which the brackets are welded may have substantially horizontal of a curved shape, depending on the curvature of the vehicle roof adjacent the sides of the sunroof. Each bracket may comprise a longitudinal section, preferably having a shape that substantially conforms to the shape of the corresponding section of the side rail, and a number of transversely extending sections to which the sunroof frame and the support frame are attached. In this case all said transverse sections are located on the same bracket. A set of brackets may comprise a single, longitudinal section, as described above, or multiple brackets, where the respective first and second sets are located on opposing side rails. In a set comprising multiple brackets, each bracket may be provided with one or more transverse sections. Also, in the same set of multiple brackets, the number of transverse sections need not be the same for adjacent brackets. In a first example, a single bracket may be provided with three transverse sections. In a second example, a set of two brackets may be provided with one and two transverse sections, respectively. In a third example, a set of three brackets may each be provided with a transverse section.

The sunroof frame and the support frame may be located relative said sets of brackets by means of manipulators and connected to the one or more transversely extending sections, or tabs, of each bracket simultaneously, in a single operational step

According to one embodiment, this involves locating the sunroof frame onto at least one upper surface of the transverse sections of each set of brackets and locating the support frame onto at least one lower surface of the transverse sections of each set of brackets.

Alternatively, it is of course possible to locate the upper sunroof frame and the lower support frame together as a unit, placing them onto at least one upper surface or at least one lower surface of the transverse sections, or tabs, of each set of brackets.

The number of transverse sections, or tabs, may be determined by the size and/or weight of the sunroof frame, the support frame and the cassette containing the sunroof and its drive units. For a standard size, electrically operated sunroof unit, two to four transverse sections, or tabs, may be used.

However, a sunroof extending along a relatively long section of the side rail may require three or more tabs, in order to prevent flexing of the sunroof frame and the support frame between attachment points. Similarly a sliding and tilting electrically operated sunroof made from a relatively heavy material, such as glass, may also require three or more tabs.

According to the invention, all the above embodiments may involve attaching the sunroof frame and the support frame to the transverse sections of each bracket using common attachment means. Any suitable attachment means may be used for this purpose, ranging from a standard nut and bolt arrangement or bayonet-type locking means to self-threading screws. The transverse sections, or tabs, are provided with corresponding recesses, such as holes or cut-outs for co-operation with said attachment means. In order to facilitate the location of the sunroof frame and the support frame relative to the transverse sections, each co-operating, adjacent surface may be provided with suitable locator means.

When required, a predetermined spacing between the sunroof frame and the support frame may preferably, but not necessarily, be achieved by shaping adjacent sections of the sunroof frame and the support frame adjacent the transverse sections to achieve a desired separation. Alternatively, distance members may be mounted on each attachment means between the sunroof frame and the support frame, where the dimensions of the distance members correspond to a desired predetermined distance.

The invention further relates to a sun roof structure for a vehicle body, assembled using the above method. This structure comprises:
- first and second side rails substantially defining an upper contour and outer side edges of a roof for said vehicle body, each said side rail extending in a longitudinal direction from the front to the back of the roof the vehicle body;
- a first and second set of attachment brackets, each arranged along opposing sides of said side rail, each said set of attachment brackets being welded to a corresponding side rail and including a number of substantially horizontal transversely extending sections, or tabs, extending towards the opposite side rail,
- a sunroof frame attached to the tabs of each of said set of attachment brackets,
- a support frame attached to the tabs of each of said set of attachment brackets,
whereby the sun roof frame and support frame extend transversely between the sets of attachment brackets at both sides of the roof structure and secured at both ends thereof to said tabs of said first and second sets of attachment brackets by the same, common attachment means.

Each longitudinal section of the brackets is preferably welded to an upper surface of a substantially horizontal section of a corresponding side rail. The welding may be performed along the entire part of the bracket in contact with the side rail, along intermittent sections or at a predetermined number of discrete points. The transverse sections of the brackets form tabs in a plane substantially parallel to and below said longitudinal section. These tabs are provided with corresponding recesses, such as holes or cut-outs for cooperation with said attachment means.

According to one embodiment, at least the sunroof frame is located adjacent or in contact with an upper surface of at least one transverse section of each of the brackets.

The support frame may be located between the sunroof frame and an upper surface of at least one transverse section of each of the brackets. Alternatively, the support frame may be located adjacent or in contact with a lower surface of at least one transverse section of the brackets, whereby the sets of brackets are located between the sunroof frame and the support frame.

In both the above embodiments, the sunroof frame and the support frame are attached to each transverse section of said brackets by the same, common attachment means. Any suitable attachment means may be used for this purpose, ranging from a standard screw and nut arrangement or bayonet-type locking means to self-threading screws. The transverse sections, or tabs, are provided with corresponding recesses, such as holes or cut-outs for co-operation with said attachment means. The assembly process may be simplified further by attaching one part or half of a fastening means to that surface of said tabs making up the uppermost or lowermost surface of the sunroof structure. For instance, if the sunroof frame constitutes the upper part of a sunroof structure held together by screw and nut fasteners, the nuts may be welded or otherwise attached directly onto the upper surface of the tabs provided on said sunroof frame. If the materials are not compatible for welding, an adhesive or other attachment means may be used.

The sunroof frame may be made from sheet metal shaped by deformation and stamping in a press. The material used may be steel, aluminium or any other suitable metal. Other suitable materials may be moulded plastic sheets. The side rails and brackets are chosen from compatible materials allowing them to be welded together. The side rails may be formed into a closed cross-section. The fastening means used for attaching the sunroof frame and support frame to the brackets allow the materials in said sunroof frame and support frame to be chosen freely. For instance, with a vehicle body and brackets made from aluminium, the sunroof frame may be made from either aluminium, for reducing weight, or steel, for increasing strength. Similarly, the support frame can be made from extruded aluminium or plastics depending on the required characteristics. Apart from weight and strength considerations, materials in direct contact should also be compatible with respect to galvanic corrosion.

### BRIEF DESCRIPTION OF DRAWINGS

In the following text, the invention will be described in detail with reference to the attached drawings. These schematic drawings are used for illustration only and do not in any way limit the scope of the invention. In the drawings:
- Figure 1: shows an example of a prior art sunroof structure assembly;
- Figure 2: shows a vehicle body provided with a pair of attachment brackets according to the invention;
- Figure 3: shows an exploded view of a sunroof structure according to the invention;
- Figure 4: shows an assembled sunroof structure according to the invention;
- Figure 5: shows a cross-section through the sunroof structure of Figure 4.

### EMBODIMENTS OF THE INVENTION

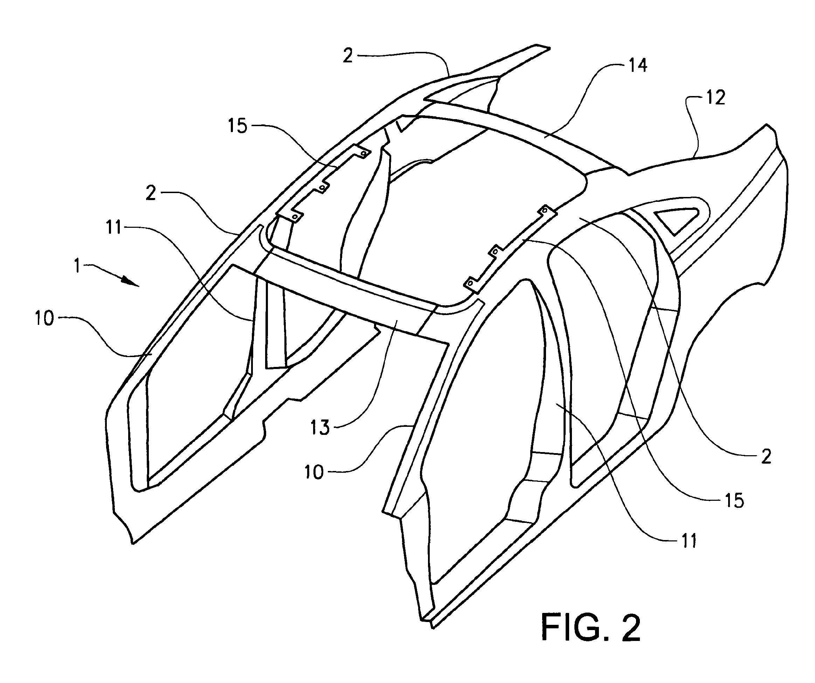

Figure 2 shows selected parts of a vehicle body 1 under assembly, wherein a floor section and other adjacent body sections have been removed for clarity. The vehicle body 1 shown is intended for a four door vehicle and comprises a front A-post 10, an intermediate B-post 11 and a rear C-post 12, where the A-and C-posts 10, 12 are connected by a side rail 2 located along an upper and outer side edge of a subsequently assembled vehicle roof. A front and a rear transverse profile 13, 14 welded to the upper regions of the A-posts and C-posts respectively, define the respective front and rear edges of said vehicle roof.

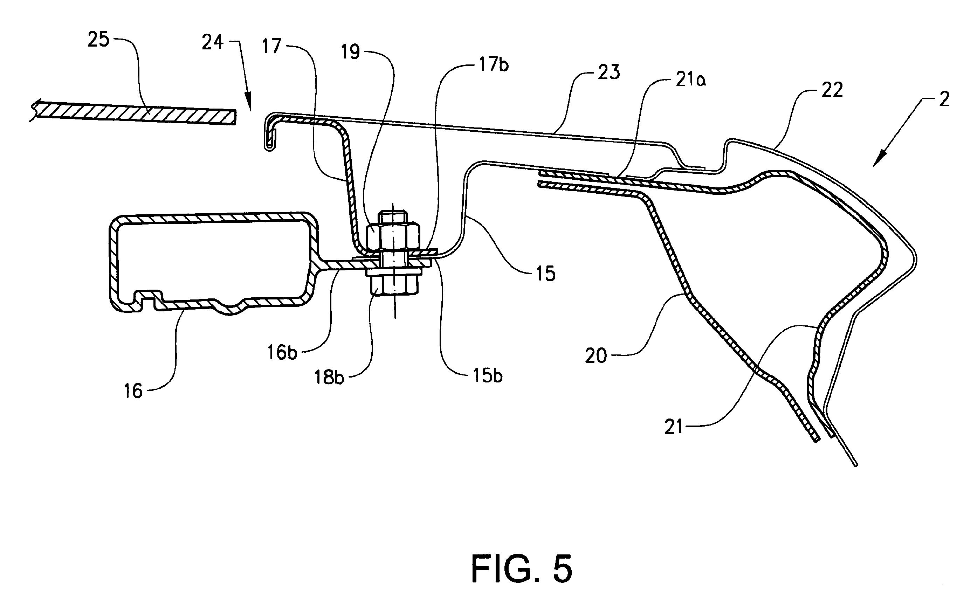

The respective A-posts and C-posts 10, 12 are connected by a side rail 2. The embodiment in Figure 2 shows the A-post 10, side rail 2 and C-post 12 forming a continuous section, which section is connected to the substantially vertical B-post 11 that separates the openings for the front and rear doors. Each side rail 2 is provided with an attachment bracket 15 attached to an upper and inner surface of the side rail, as shown in more detail in Figure 5. As opposite sides of the vehicle will represent a reversed or mirror image of each other, only one side of the vehicle will be described in the subsequent text unless stated otherwise.

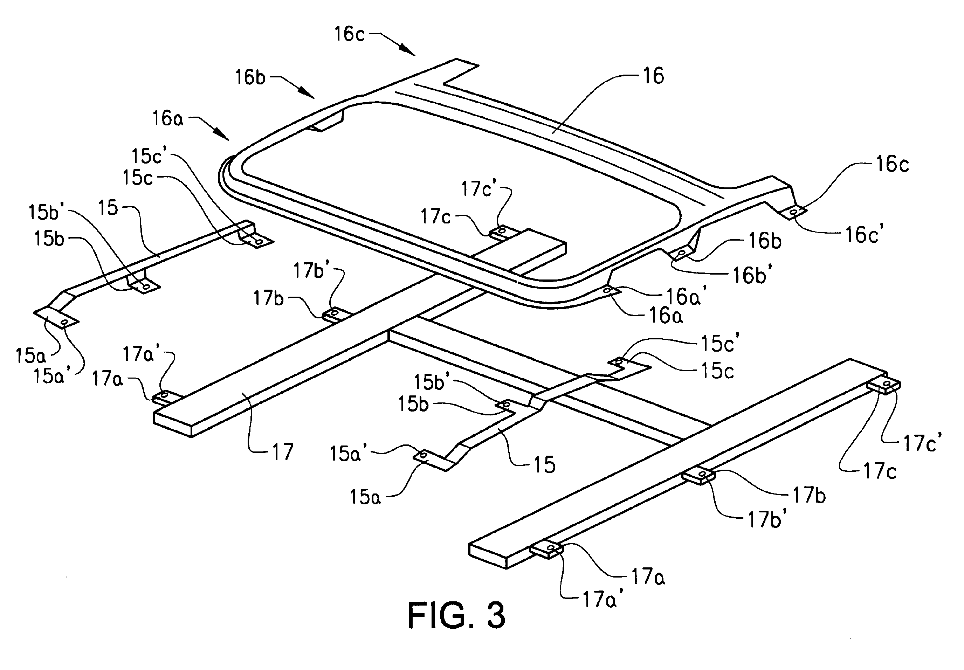

Figure 3 shows an exploded view of a sunroof structure comprising a pair of attachment brackets 15, a sunroof frame 16 and a support frame 17. Each attachment bracket 15 is provided with a set of integral first attachment means, in the form of three tabs 15a, 15b, 15c shaped to extend in a transverse direction away from the longitudinal section of the attachment bracket and towards the opposite side of the vehicle body. The tabs 15a, 15b, 15c are located a plane below and substantially parallel to the longitudinal section of the attachment bracket 15. All tabs 15a, 15b, 15c are provided with recesses 15a', 15b', 15c' for cooperation with a corresponding number of fastening means.

The sunroof frame 16 comprises a section of stamped sheet metal having an opening for a sunroof (not shown). An upper surface of the sunroof frame 16 is used to support a section of an outer skin of the finished vehicle roof, as shown in Figure 5. At is side edges, the sunroof frame 16 is provided with a set of integral second attachment means, in the form of three tabs 16a, 16b, 16c shaped to extend in a transverse direction away from the sunroof opening, towards their respective attachment bracket. The tabs 16a, 16b, 16c are located a plane below and substantially parallel to the upper surface of the sunroof frame 16. Each tab 16a, 16b, 16c is provided with a recess 16a', 16b', 16c' and a threaded nut welded to an upper surface of said tab 16a, 16b, 16c over each recess for cooperation with a corresponding fastening means.

The support frame 17 comprises a pair of parallel, extruded sections located along the outer side edges of the opening for a sunroof and connected by a transverse section of stamped sheet metal. The upper surface of the support frame 17 is provided with extruded guides and tracks for controlling the sliding movement of the sunroof. At is side edges, the support frame 17 is provided with a set of integral third attachment means, in the form of three tabs 17a, 17b, 17c cut in the extruded section to extend in a transverse direction away from the sunroof opening, towards their respective attachment bracket. The tabs 17a, 17b, 17c are located a plane below and substantially parallel to the upper surface of the sunroof frame 17. Each tab 17a, 17b, 17c is provided with a recess 17a', 17b', 17c' for cooperation with a corresponding number of fastening means.

During assembly, fastening means in the form of screws (not shown) will be passed through the recesses in the support frame 17, the attachment brackets 15 and the sunroof frame 16, where it will cooperate with a corresponding nut to fasten the sunroof structure to the vehicle body.

The distance between a substantially horizontal plane containing the assembled tabs and the planes containing the adjacent longitudinal section of the attachment brackets and the upper surface of the sunroof frame respectively, is selected to give a desired spacing between the upper surface of the sunroof frame and the support frame. The sunroof, its electric controls and drive mechanisms and/or motors are subsequently mounted in this space.

During assembly, a material handling manipulator (not shown) will pick up a bracket from a supply station adjacent the assembly line and locate the bracket it in its intended position along and in contact with an upper and inner surface of the side rail. The material handling manipulator will hold the bracket in place while a welding robot attaches it to the side rail by means of a predetermined number of spot welds. At substantially the same time an identical but reversed bracket is welded to the side rail on the opposite side of the vehicle.

The material handling manipulator is preferably provided with mechanical clamping and/or gripping means, but pneumatic suction means, magnetic means or other suitable means may be used for positioning the bracket and holding or clamping it in place.

Alternatively, the manipulator performing the welding operation is provided with clamping means for holding the bracket in place.

For a two door vehicle, the upper section of the B-post can be omitted. The parts of the side rails onto which the attachment brackets are welded will be substantially identical, allowing the same brackets to be used for different vehicle models.

Once the attachment brackets have been welded into place, the vehicle body is moved to a subsequent assembly station, where further material handling manipulators will pick up a sunroof frame and a support frame from a supply station adjacent the assembly line and locate them it in their intended positions along and in contact with upper and lower surfaces respectively of a number of tabs on each attachment bracket. The material handling manipulators will hold the sunroof frame and the support frame in place while robots on either side of the assembly line locates fastening means, preferably in the form of screws, through cooperating, coaxial recesses in the outer edges of the sunroof frame and the support frame and in the tabs of the attachment brackets. The screws are the provided with mating nuts and tightened to fix the sunroof structure to the attachment brackets and the vehicle body.

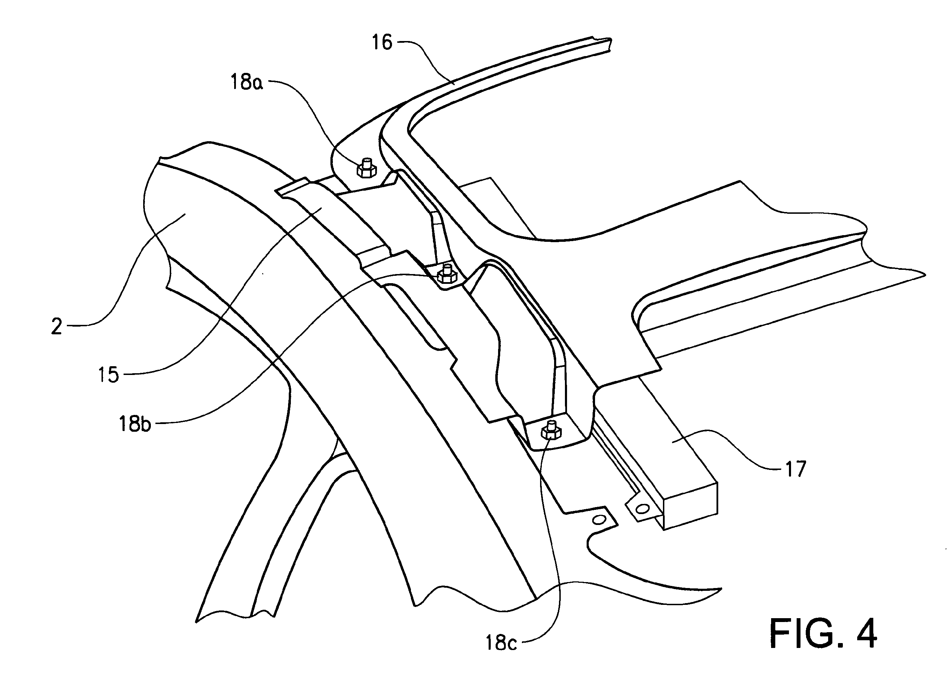

Figure 4 shows an assembled sunroof structure, where the bracket 15 has been welded onto the side rail 2 of the vehicle body. The figure further shows the simultaneously assembled sunroof frame 16 and support frame 17 in position and fixed to the bracket 15 by means of three screws 18a, 18b, 18c. The screws 18a, 18b, 18c have been introduced from below, upwards through the tabs 17a, 17b, 17c (see Figure 4) of the support frame 17 and the tabs 15a, 15b, 15c (see Figure 4) of the bracket 15. The said screws have subsequently been fastened to the nuts welded to the tabs 16a, 16b, 16c (see Figure 4) of the sunroof frame 16 to fix the assembled sunroof structure to the vehicle body.

Figure 5 shows a cross-section of the assembled sunroof structure shown in Figure 4, in a plane at right angles to the longitudinal axis of the vehicle body and through the central fastener means 18b. In this figure it can be seen that the side rail 2 comprises an internal structure comprising an inner and an outer, shaped sheet metal section 20, 21 welded together to form a closed profile that is part of an impact absorbing structure. Welded onto the first outer sheet metal section 21 is a further, second sheet metal section 22, provided to give the side rail 2 a desired outer contour.

The bracket 15 is welded to an upper, inwardly extending surface 21 a of the first outer sheet metal section 21. The bracket 15 extends a short distance inwards and is first bent downwards and then inwards to form a flange or tab 15b to which the sunroof structure is attached. The support frame 16 is provided with a tab 16b in contact with the lower surface of the tab 15b of the bracket 15, while the sunroof frame 17 is provided with a tab 17b in contact with the upper surface of said tab 15b. The fastener, or screw 18b is optionally provided with a washer and passes through recesses in all three tabs 15b, 16b, 17b to mate with a nut 19 welded to the upper surface of the tab 17b on the sunroof frame 17.

The figure also indicated the location of a subsequently mounted outer roof section 23 extending from the side rail 2 to an opening 24 provided in the sunroof frame 17 for a sunroof 25. The outer roof section 23 is welded to an upper, inwardly extending surface of the second sheet metal section 22 and a substantially vertical flange extending around the inner edge of the sunroof opening in the sunroof frame 17. Alternatively, depending on the choice of materials in the sunroof frame and outer roof section, these parts may be attached by a suitable adhesive.

The invention is not limited to the above embodiments, but may be varied freely within the scope of the claims.

## Claims

1. A method for assembling a vehicle sun roof structure onto a vehicle body wherein the sunroof structure comprises a sunroof frame (16) and a support frame (17) mounted between first and second side rails (2) extending in the longitudinal direction of the vehicle body and substantially defining an upper contour and outer side edges of a roof for said vehicle body, wherein the sunroof frame (16) is provided with an opening for a sunroof and the support frame (17) is provided with guides and tracks for controlling the sliding movement of the sunroof **characterized in that** the method comprising the steps of:
- locating a first and a second sets of brackets (15) along opposing sides of a section of a respective first and second side rails (2) and welding the sets of brackets (15) to said side rails (2), and
- locating a sunroof frame (16) and a support frame (17) onto a number of transverse sections of said first and second brackets (15) and attaching the sunroof frame (16) and support frame (17) to each transverse section of said brackets (15) by the same, common attachment means (18).

2. Method according to claim **characterized by** simultaneously attaching the sunroof frame (16) and support frame (17) to said sets of brackets (15).

3. Method according to claim 2, **characterized by** locating the sunroof frame (16) onto at least one upper surface of the transverse sections of each set of bracket (15).

4. Method according to claim 3, **characterized by** locating the support frame (17) onto at least one lower surface of the transverse sections of each sets of brackets (15).

5. Method according to claim 1, **characterized in that** the attachment of the sunroof frame (16) and support frame (17) to said brackets (15) is performed by locating attachment means (18) through cooperating, coaxial recesses in the outer edges of the sunroof frame (16) and the support frame (17) and in a number of tabs (15a, 15b, 15c) of the attachment brackets (15).

6. Method according to claim 1, **characterized by** mounting distance members to each attachment means for separating the sunroof frame (16) and the support frame (17) a predetermined distance.

7. Method according to claim 1, **characterized by** that each attachment bracket (15) is provided with a set of integral first attachment means (15a, 15b, 15c), the sunroof frame (16) is provided with a set of integral second attachment means (16a, 16b, 16c) and the support frame (17) is provided with a set of integral third attachment means (17a, 17b, 17c), wherein the second integral attachment means (16a, 16b, 16c) and the third integral attachment means (17a, 17b, 17c) are attached to the first integral attachment means (15a, 15b, 15c) by use of a common attachment means (18).

8. A sun roof structure for a vehicle body, which structure comprises:
- first and second side rails (2) substantially defining an upper contour and outer side edges of a roof for said vehicle body, each said side rail (2) extending in a longitudinal direction from the front to the back of the roof the vehicle body;
- a first and second set of attachment brackets (15), each set being arranged along opposing sides of said side rail (2), each said set of attachment brackets (15) being welded to a corresponding side rail (2) and including a number of tabs (15a, 15b, 15c) extending towards the opposite side rail (2),
- a sunroof frame (16) having an opening for a sunroof, which sunroof frame (16) is attached to the tabs of each of said set of attachment brackets (15),
- a support frame (17) provided with guides and tracks for controlling the sliding of the sunroof, which support frame (17) is attached to the tabs of each of said set of attachment brackets (15),
whereby the sun roof frame (16) and support frame (17) extends transversely between the sets of attachment brackets (15) at both sides of the roof structure and are secured at both ends thereof to said tabs of said first and second sets of attachment brackets (15) by the same, common attachment means.

9. Sun roof structure according to claim 8, **characterized in that** at least the sunroof frame (16) is located on an upper surface of at least one transverse section of the brackets (15).

10. Sun roof structure according to claim 1, **characterized in that** the support frame (17) is located on a lower surface of at least one transverse section of the sets of brackets (15).

11. Sun roof structure according to claim 8, **characterized in that** the sunroof frame (16) and support frame (17) are attached to said brackets (15) by attachment means located through cooperating, coaxial recesses in the outer edges of the sunroof frame (16) and the support frame (17) and in the tabs (15a, 15b, 15c) of the sets of attachment brackets (15).

12. Sun roof structure according to claim 8, **characterized in that** each bracket (15) comprises a substantial longitudinal section that is welded to an upper surface of a substantially horizontal section of a corresponding side rail (2).

13. Sun roof structure according to claim 12, **characterized in that** the tabs (15a, 15b, 15c) form transverse sections in a plane substantially parallel to and below said longitudinal section.

14. Sun roof structure according to claim 12, **characterized in that** the side rails (2) have a closed cross section.

15. Sun roof structure according to claim 8, **characterized by** that each attachment bracket (15) is provided with a set of integral first attachment means (15a, 15b, 15c), the sunroof frame (16) is provided with a set of integral second attachment means (16a, 16b, 16c) and the support frame (17) is provided with a set of integral third attachment means (17a, 17b 17c), wherein the second integral attachment means (16a, 16b, 16c) and the third integral attachment means (17a, 17b, 17c) are attached to the first integral means (15a, 15b, 15c).

16. Sun roof structure according to any one of the claims 8-15, **characterized in that** the sun roof structure is assembled using the method of any one of the claims 1-7.

## Patentansprüche

1. Verfahren zur Montage einer Fahrzeugschiebedachstruktur an einen Fahrzeugkörper, wobei die Schiebedachstruktur einen Schiebedachrahmen (16) und einen Trägerrahmen (17) umfasst, die zwischen ersten und zweiten Seitenholmen (2) angebracht sind, die sich in der Längsrichtung des Fahrzeugkörpers erstrecken und im Wesentlichen eine obere Kontur und äußere Seitenränder eines Dachs für den Fahrzeugkörper definieren, wobei der Schiebedachrahmen (16) mit einer Öffnung für ein Schiebedach vorgesehen ist und der Trägerrahmen (17) mit Führungen und Bahnen zum Steuern der Verschiebungsbewegung des Schiebedachs vorgesehen ist, **dadurch gekennzeichnet, dass** das Verfahren die Schritte umfasst:
- Vorsehen einer ersten und zweiten Gruppe von Bügeln (15) entlang gegenüberliegender Seiten eines Bereichs eines entsprechenden ersten und zweiten Seitenholms (2) und Schweißen der Gruppen von Bügeln (15) an die Seitenholme (2), und
- Vorsehen eines Schiebedachrahmens (16) und eines Trägerrahmens (17) an einer Anzahl von Querbereichen des ersten und zweiten Bügels (15) und Anbringen des Schiebedachrahmens (16) und des Trägerrahmens (17) an die Querbereiche der Bügel (15) mittels ein und denselben Anbringungsmitteln (18).

2. Verfahren nach Anspruch 1, **gekennzeichnet durch** gleichzeitiges Anbringen des Schiebedachrahmens (16) und des Trägerrahmens (17) an die Gruppen von Bügeln (15).

3. Verfahren nach Anspruch 2, **gekennzeichnet durch** Vorsehen des Schiebedachrahmens (16) an wenigstens einer oberen Fläche der Querbereiche von jeder Gruppe von Bügeln (15).

4. Verfahren nach Anspruch 3, **gekennzeichnet durch** Vorsehen des Trägerrahmens (17) an wenigstens einer unteren Fläche der Querbereiche von jeder der Gruppen von Bügeln (15).

5. Verfahren nach Anspruch 1, **dadurch gekennzeichnet, dass** das Anbringen des Schiebedachrahmens (16) und des Trägerrahmens (17) an die Bügel (15) durch Einbringen von Anbringungsmitteln (18) durch übereinstimmende, koaxiale Aussparungen in den äußeren Rändern des Schiebedachrahmens (16) und des Trägerrahmens (17) und in einer Anzahl von Nasen (15a, 15b, 15c) der Anbringungsbügel (15) vollzogen wird.

6. Verfahren nach Anspruch 1, **gekennzeichnet durch** Anbringen von Abstandselementen an jedes Anbringungsmittel zum Trennen des Schiebedachrahmens (16) und des Trägerrahmens (17) um einen bestimmten Abstand.

7. Verfahren nach Anspruch 1, **dadurch gekennzeichnet, dass** jeder Anbringungsbügel (15) mit einer Gruppe von integralen ersten Anbringungsmitteln (15a, 15b, 15c) vorgesehen ist, der Schiebedachrahmen (16) mit einer Gruppe von integralen zweiten Anbringungsmitteln (16a, 16b, 16c) vorgesehen ist und der Trägerrahmen (17) mit einer Gruppe von integralen dritten Abringungsmitteln (17a, 17b, 17c) vorgesehen ist, wobei die zweiten integralen Anbringungsmittel (16a, 16b, 16c) und die dritten integralen Anbringungsmittel (17a, 17b, 17c) unter Verwendung gemeinsamer Anbringungsmittel (18) an die ersten integralen Anbringungsmittel (15a, 15b, 15c) angebracht werden.

8. Schiebedachstruktur für einen Fahrzeugkörper, wobei die Struktur umfasst:
- erste und zweite Seitenholme (2), welche im Wesentlichen eine obere Kontur und äußere Seitenränder eines Dachs für den Fahrzeugkörper definieren, wobei jeder der Seitenholme (2) sich in einer Längsrichtung von der Vorderseite zur Rückseite des Dachs des Fahrzeugkörpers erstreckt;
- eine erste und zweite Gruppe von Anbringungsbügeln (15), wobei jede Gruppe entlang gegenüberliegender Seiten der Seitenholme (2) angeordnet ist, jede Gruppe von Anbringungsbügeln (15) an einen entsprechenden Seitenholm (2) geschweißt ist und eine Anzahl von Nasen (15a, 15b, 15c) enthält, die sich zum gegenüberliegenden Seitenholm (2) erstrecken,
- einen Schiebedachrahmen (16), der eine Öffnung für ein Schiebedach aufweist, wobei der Schiebedachrahmen (16) an die Nasen jeder Gruppe von Anbringungsbügeln (15) angebracht ist,
- einen Trägerrahmen (17), der mit Führungen und Bahnen zum Steuern der Verschiebungsbewegung des Schiebedachs vorgesehen ist, wobei der Trägerrahmen (17) an die Nasen jeder Gruppe von Anbringungsbügeln (15) angebracht ist,
bei dem der Schiebedachrahmen (16) und der Trägerrahmen (17) sich zwischen den Gruppen von Anbringungsbügeln auf beiden Seiten der Dachstruktur quer erstrecken und an beiden Enden davon mit den Nasen der ersten und zweiten Gruppe von Anbringungsbügeln (15) mittels ein und denselben Anbringungsmitteln gesichert sind.

9. Schiebedachstruktur nach Anspruch 8, **dadurch gekennzeichnet, dass** wenigstens der Schiebedachrahmen (16) auf einer oberen Fläche von wenigstens einem Querbereich der Bügel (15) positioniert ist.

10. Schiebedachstruktur nach Anspruch 8, **dadurch gekennzeichnet, dass** der Trägerrahmen (17) auf einer unteren Fläche von wenigstens einem Querbereich der Gruppen von Bügeln (15) positioniert ist.

11. Schiebedachstruktur nach Anspruch 8, **dadurch gekennzeichnet, dass** der Schiebedachrahmen (16) und Trägerrahmen (17) an den Bügeln (15) mittels Anbringungsmitteln angebracht sind, die durch übereinstimmende, koaxiale Aussparungen in den äußeren Rändern des Schiebedachrahmens (16) und des Trägerrahmens (17) und in den Nasen (15a, 15b, 15c) der Gruppen von Anbringungsbügeln (15) eingebracht sind.

12. Schiebedachstruktur nach Anspruch 8, **dadurch gekennzeichnet, dass** jeder Bügel (15) einen im Wesentlichen longitudinalen Bereich umfasst, der an einer oberen Fläche eines im Wesentlichen horizontalen Bereichs eines entsprechenden Seitenholms (2) angeschweißt ist.

13. Schiebedachstruktur nach Anspruch 12, **dadurch gekennzeichnet, dass** die Nasen (15a, 15b, 15c) Querbereiche in einer Ebene im Wesentlichen parallel zu und unterhalb des longitudinalen Bereichs ausbilden.

14. Schiebedachstruktur nach Anspruch 12, **dadurch gekennzeichnet, dass** die Seitenholme (2) einen geschlossenen Querschnitt aufweisen.

15. Schiebedachstruktur nach Anspruch 8, **dadurch gekennzeichnet, dass** jeder Bügel (15) mit einer Gruppe von integralen ersten Anbringungsmitteln (15a, 15b, 15c) vorgesehen ist, der Schiebedachrahmen (16) mit einer Gruppe von integralen zweiten Anbringungsmitteln (16a, 16b, 16c) vorgesehen ist und der Trägerrahmen (17) mit einer Gruppe von integralen dritten Anbringungsmitteln (17a, 17b, 17c) vorgesehen ist, wobei die zweiten integralen Anbringungsmittel (16a, 16b, 16c) und die dritten integralen Anbringungsmittel (17a, 17b, 17c) an den ersten integralen Anbringungsmitteln (15a, 16b, 15c) angebracht sind.

16. Schiebedachstruktur nach einem der Ansprüche 8 bis 15, **dadurch gekennzeichnet, dass** die Schiebedachstruktur unter Verwendung des Verfahrens nach einem der Ansprüche 1 bis 7 montiert ist.

## Revendications

1. Méthode d'assemblage d'une structure de toit ouvrant de véhicule sur une carrosserie de véhicule, dans laquelle la structure de toit ouvrant comprend un châssis de toit ouvrant (16) et un châssis de support (17) montés entre des première et deuxième rampes latérales (2) s'étendant dans la direction longitudinale de la carrosserie de véhicule et définissant sensiblement un contour supérieur et des bords latéraux extérieurs d'un toit pour ladite carrosserie de véhicule, dans laquelle le châssis de toit ouvrant (16) est pourvu d'une ouverture pour un toit ouvrant et le châssis de support (17) est pourvu de guides et de rails pour contrôler le mouvement coulissant du toit ouvrant, **caractérisée en ce que** la méthode comprend les étapes consistant à :
■ localiser des premier et deuxième ensembles de tasseaux (15) le long des côtés opposés d'une partie de première et deuxième rampes latérales respectives (2) et souder les ensembles de tasseaux (15) sur lesdits rails latéraux (2), et
■ localiser un châssis de toit ouvrant (16) et un châssis de support (17) sur un certain nombre de parties transversales desdits premier et deuxième tasseaux (15) et attacher le châssis de toit ouvrant (16) et le châssis de support (17) sur chaque partie transversale desdits tasseaux (15) par le même moyen commun d'attachement (18).

2. Méthode selon la revendication 1, **caractérisée par** l'attachement simultané du châssis de toit ouvrant (16) et du châssis de support (17) auxdits ensembles de tasseaux (15).

3. Méthode selon la revendication 2, **caractérisée par** la localisation du châssis de toit ouvrant (16) sur au moins une surface supérieure des parties transversales de chaque ensemble de tasseaux (15).

4. Méthode selon la revendication 3, **caractérisée par** la localisation du châssis de support (17) sur au moins une surface inférieure des parties transversales de chaque ensemble de tasseaux (15).

5. Méthode selon la revendication 1, **caractérisée en ce que** l'attachement du châssis de toit ouvrant (16) et du châssis de support (17) auxdits tasseaux (15) est effectué en localisant un moyen d'attachement (18) à travers des évidements coaxiaux coopérant dans les bords extérieurs du châssis de toit ouvrant (16) et du châssis de support (17) et dans un certain nombre de pattes (15a, 15b, 15c) des tasseaux d'attachement (15).

6. Méthode selon la revendication 1, **caractérisée par** le montage d'éléments de distance sur chaque moyen d'attachement pour séparer le châssis de toit ouvrant (16) et le châssis de support (17) d'une distance prédéterminée.

7. Méthode selon la revendication 1, **caractérisée en ce que** chaque tasseau d'attachement (15) est pourvu d'un ensemble de premiers moyens d'attachements intégraux (15a, 15b, 15c), le châssis de toit ouvrant (16) est pourvu d'un ensemble de deuxièmes moyens d'attachements intégraux (16a, 16b, 16c) et le châssis de support (17) est pourvu d'un ensemble de troisièmes moyens d'attachements intégraux (17a, 17b, 17c), dans laquelle les deuxièmes moyens d'attachements intégraux (16a, 16b, 16c) et les troisièmes moyens d'attachements intégraux (17a, 17b, 17c) sont attachés aux premiers moyens d'attachements intégraux (15a, 15b, 15c) en utilisant un moyen d'attachement commun (18).

8. Structure de toit ouvrant pour une carrosserie de véhicule, laquelle structure comprenant :
■ des première et deuxième rampes latérales (2) définissant sensiblement un contour supérieur et des bords latéraux extérieurs d'un toit pour ladite carrosserie de véhicule, chaque dite rampe latérale (2) s'étendant dans une direction longitudinale de l'avant à l'arrière de la carrosserie de véhicule ;
■ des premier et deuxième ensembles de tasseaux (15), chaque ensemble étant agencé le long des côtés opposés de ladite rampe latérale (2), chaque dit ensemble de tasseaux d'attachement (15) étant soudé sur une rampe latérale correspondante (2) et comprenant un certain nombre de pattes (15a, 15b, 15c) s'étendant vers la rampe latérale opposée (2),
■ un châssis de toit ouvrant (16) ayant une ouverture pour un toit ouvrant, lequel châssis de toit ouvrant (16) est attaché aux pattes de chacun desdits ensembles de tasseaux d'attachement (15),
■ un châssis de support (17) pourvu de guides et de rails pour contrôler le mouvement coulissant du toit ouvrant, lequel châssis de support (17) est attaché aux pattes de chacun desdits ensembles de tasseaux d'attachement (15), moyennant quoi le châssis de toit ouvrant (16) et le châssis de support (17) s'étendent transversalement entre les ensembles de tasseaux d'attachement (15) des deux côtés de la structure de toit et sont fixés aux deux extrémités de celle-ci sur lesdites pattes desdits premier et deuxième ensembles de tasseaux d'attachement (15) par le même moyen commun d'attachement.

9. Structure de toit ouvrant selon la revendication 8, **caractérisée en ce qu'**au moins le châssis de toit ouvrant (16) est situé sur une surface supérieure d'au moins une partie transversale des tasseaux (15).

10. Structure de toit ouvrant selon la revendication 8, **caractérisée en ce que** le châssis de support (17) est situé sur une surface inférieure d'au moins une partie transversale des ensembles de tasseaux (15).

11. Structure de toit ouvrant selon la revendication 8, **caractérisée en ce que** le châssis de toit ouvrant (16) et le châssis de tasseaux (17) sont attachés auxdits tasseaux (15) par des moyens d'attachements situés à travers des évidements coaxiaux coopérant dans les bords extérieurs du châssis de toit ouvrant (16) et du châssis de support (17) et dans les pattes (15a, 15b, 15c) des ensembles de tasseaux d'attachement (15).

12. Structure de toit ouvrant selon la revendication 8, **caractérisée en ce que** chaque tasseau (15) comprend une partie sensiblement longitudinale qui est soudée sur une surface supérieure d'une partie sensiblement horizontale d'une rampe latérale correspondante (2).

13. Structure de toit ouvrant selon la revendication 12, **caractérisée en ce que** les pattes (15a, 15b, 15c) forment des parties transversales dans un plan sensiblement parallèle à ladite partie longitudinale et au-dessous de celle-ci.

14. Structure de toit ouvrant selon la revendication 12, **caractérisée en ce que** les rampes latérales (2) ont une coupe transversale fermée.

15. Structure de toit ouvrant selon la revendication 8, **caractérisée en ce que** chaque tasseau d'attachement (15) est pourvu d'un ensemble de premiers moyens d'attachements intégraux (15a, 15b, 15c), le châssis de toit ouvrant (16) est pourvu d'un ensemble de deuxièmes moyens d'attachements intégraux (16a, 16b, 16c) et le châssis de support (17) est pourvu d'un ensemble de troisièmes moyens d'attachements intégraux (17a, 17b, 17c), dans laquelle les deuxièmes moyens d'attachements intégraux (16a, 16b, 16c) et les troisièmes moyens d'attachements intégraux (17a, 17b, 17c) sont attachés aux premiers moyens d'attachements intégraux (15a, 15b, 15c).

16. Structure de toit ouvrant selon l'une quelconque des revendications 8 à 15, **caractérisée en ce que** la structure de toit ouvrant est assemblée en utilisant la méthode selon l'une quelconque des revendications 1 à 7.
